# EUROPEAN PATENT SPECIFICATION

(11) **EP 1 005 820 B1**
(45) Date of publication and mention of the grant of the patent: **25.09.2002**
(21) Application number: 98830726.0
(22) Date of filing: 02.12.1998
(51) Int. Cl.: A47J 27/05

(54) **Apparatus and process for cooking and/or heating low-temperature food, in particular rice**
Gerät und Verfahren zum Kochen und/oder Erwärmen von Nahrungsmitteln auf niedrige Temperatur, insbesondere Reis
Dispositif et méthode pour cuire et/ou rechauffer de la nourriture à basse température, en particulier du riz

(43) Date of publication of application: 07.06.2000
(73) Proprietor: FRABOSK CASALINGHI S.p.A., 25067 Lumezzane S.A. (Brescia) (IT)
(72) Inventor: Ghidini, Tiziano, 25067 Lumezzane S.A. (Brescia) (IT)
(74) Representative: Ghioni, Carlo Raoul Maria

(56) References cited:
- CH-A- 330 764
- DE-B- 1 165 828
- DE-C- 382 240

## Description

The present invention relates to an apparatus and a process for cooking and/or heating low-temperature food, in particular rice, as described in the preamble of claim 1.

It is known that cooking and/or heating of food and foodstuffs can be carried out either by use of pots or vessels directly put on a high-temperature heat source, generally consisting of a flame from a hot plate apparatus or a radiant boiling plate apparatus, or by use of vessels that are not put directly in contact with the high-temperature source. These vessels are immersed in water which in turn is held in other bigger vessels receiving heat directly from a flame for example.

This technique, commonly known as "bain-marie" cooking enables constant temperatures lower than 100°C to be maintained in the cooking space defined by the smaller vessel, if cooking takes place with boiling water at atmospheric pressure. These temperatures are particularly suitable to cook and/or heat some types of food, also preventing the food from attaching to the vessel bottom due to too much evaporation of the liquid in which it is cooked.

Also known is the steam cooking technique, of rice and vegetables for example, enabling drawbacks such as reduction of vitamins and mineral salts caused by boiling in water to be eliminated.

Practically steam cooking, in addition to greatly maintaining the organoleptic properties proper to a raw food, enables appearance, taste, digestibility of many types of food to be improved, among which fish, shellfish and poultry are also to be mentioned.

It is also known from patent CH-A-330764 an apparatus for cooking food according to the preamble of claim 1, comprising a plurality of pots disposed one above the others. In particular CH-A-330764 discloses an apparatus comprising a first single pot, a second single pot disposed upon the first single pot and provided with holes in the bottom wall, a first double pot disposed above the second single pot and provided with holes both in the bottom wall and in the inner wall, and a second double pot identical to the first double pot and disposed above the first double pot. In this apparatus the steam produced by water in the first single pot reaches the food housed in the above pots.

Under this situation, the technical task underlying the present invention is to devise an apparatus and process for cooking, and/or heating low-temperature food, enabling the known methods of bain-marie and steam cooking to be simultaneously combined so as to enhance, by a synergetic action, the above-mentioned respective advantageous features.

The technical task mentioned is substantially achieved by an apparatus which comprises the technical features described in the characterizing part of claim 1.

The technical task mentioned is also substantially achieved by a process for cooking and/or heating low-temperature food, in particular rice, comprising the steps of claim 4.

Description of a preferred, non exclusive embodiment of an apparatus in accordance with the invention is now taken hereinafter, by way of non-limiting example, with reference to the accompanying drawings, in which:

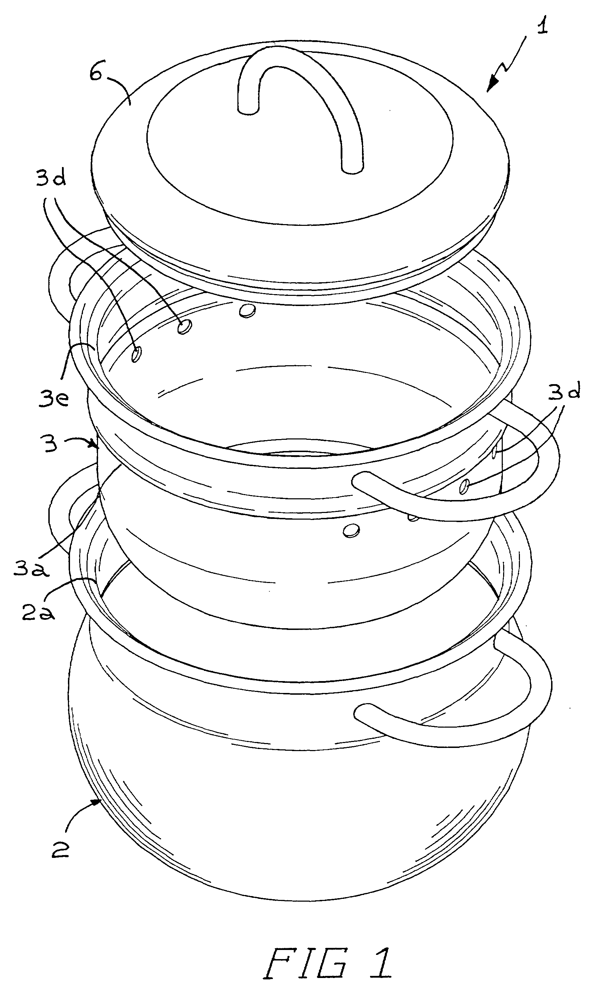

- Fig. 1 is an exploded perspective view of the apparatus in accordance with the invention;

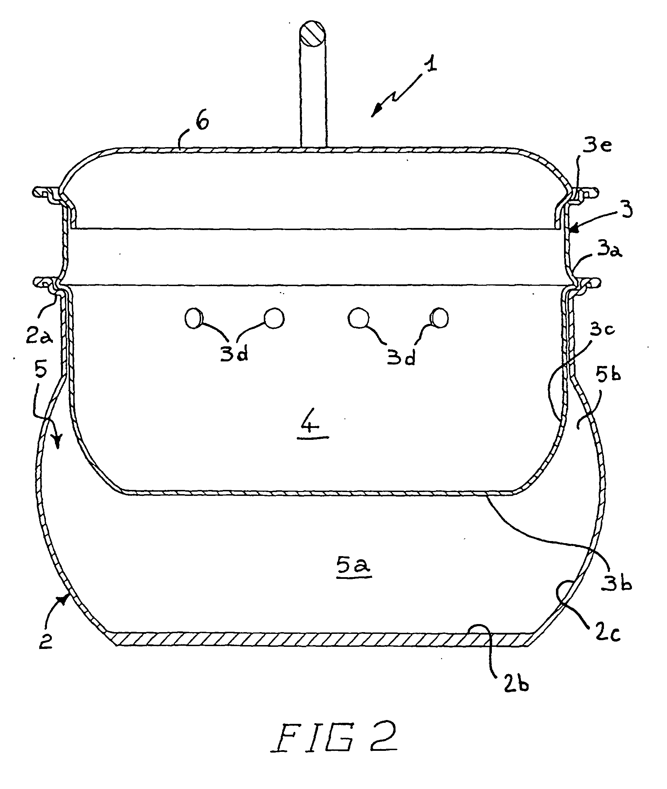

- Fig. 2 shows a longitudinal section of the apparatus seen in Fig. 1.

With reference to the drawing, the apparatus in accordance with the invention has been generally identified by reference numeral 1.

It comprises an outer pot body 2 having an upper rest rim 2a, and an inner pot body 3 insertable in the outer pot body 2 and circumferentially provided with a support expansion 3a projecting to such an extent that in an operating position it can be disposed upon the rest rim 2a.

The inner pot body 3 defines a cooking chamber 4 and in said operating position it forms, in cooperation with the outer pot body 2, a closed hollow space 5 included between respective bottoms 3b and 2b and respective side surfaces 3c and 2c.

In an original manner, the inner pot body 3 is provided, on its side surface 3c and under the support expansion 3a, with a plurality of through openings 3d. Practically the outer 2 and inner 3 pot bodies have appropriate shapes and sizes so that in the hollow space 5 a lower region 5a adapted to hold a predetermined amount of water to be brought to a boil and an upper region 5b adapted to contain steam generated from the boiling water placed below are formed. The upper region 5b is put into communication, via the through openings 3d, with the cooking chamber 4.

Advantageously, the support expansion 3a of the inner pot body 3 is disposed spaced apart from an upper perimetric rim 3e of the pot body 3 itself on which a closing lid 6 rests.

In this way an appropriate volume between the closing lid and the band of the side surface 3c in which the through openings 3d are formed is developed, which volume is adapted to increase the space taken up by steam over the food to be cooked and laid down in the cooking chamber 4, thereby improving exposure thereof to the steam action.

Use and operation of a cooking and/or heating apparatus described above mainly as regards structure are as follows.

First of all an appropriate amount of water is admitted to the outer pot body 2. The inner pot body 3, intended for receiving the foodstuffs to be cooked always accompanied by a convenient amount of hot water or broth, is fitted in the outer pot body 2 until the support expansion 3a abuts against the rest rim 2a of the outer pot body 2. The latter is brought into contact with a flame or another high-temperature heat source.

The hot water to be joined to the food in the inner pot body can be also taken from the outer pot body in which water has been previously heated. The given amount of water to be added, in case of rice for example, is about one glass for each rice handful.

Addition of this given amount of water has the function of keeping food soft and, in the case of rice, retaining starch as well. Water contained in the lower region 5a of the hollow space 5 comes to a boil and, if it is of a sufficient amount to be in contact with the lower portion of the inner pot body 3, directly transmits heat to said pot body 3, thereby carrying out a bain-marie cooking of the food contained therein.

It is pointed out that the mere contact between the rest rim 2a and support expansion 3a and the presence of through openings 3d cause a pressure in the hollow space 5 which is equal to the ambient pressure and therefore a boiling temperature of the water of about 100°C. Heat is therefore transmitted to the cooking chamber 4 of the inner pot body 3 at a constant temperature lower than 100°C. Steam formed in the upper region 5b of the hollow space 5 over the boiling water is conveyed, via the through openings 3d, to the cooking chamber 4 thereby carrying out, in addition to a bain-marie cooking, a steam cooking of the foodstuffs contained in said cooking chamber.

It will be recognized that if the amount of water admitted to the outer body 2 is reduced, i.e. it does not slightly touch bottom 3b and the lower part of the inner pot body 3, cooking is carried out just the same because the inner pot body is licked by steam and the food does not come directly in contact with the flame.

The invention puts into practice a new process being an integral part of the present patent as well.

It consists in prearranging an inner pot body 2 adapted to house food to be cooked and/or heated, adding a given amount of hot water or broth to said food, interposing a hollow space 5 between the outer surface of the inner pot body and a high-temperature heat soruce such as a flame, which hollow space is defined by a pot body disposed externally of the first pot body and is adapted to hold water to be brought into a boil so that it transfers heat to the inner pot body, and conveying steam directly to the food housed in the inner pot body itself.

Advantageously, steam conveyed to the food is obtained from the same boiling water present in the hollow space included between the two vessels.

The invention achieves important advantages.

As a matter of fact, the apparatus and process in accordance with the invention not only enable transmission of heat to the food contained in the inner vessel at a low and homogeneous temperature through said vessel walls, but they also allow a simultaneous steam cooking to be carried out, thus enhancing the qualitative advantages of both cooking modes and reducing the periods of time usually provided for performing said operations separately.

In this manner food is also tastier and more digestible as compared with food cooked with traditional cooking systems.

In addition, the apparatus is of very simple, practical and quick use as it is only necessary to admit water to the outer vessel and introduce the inner vessel intended for housing the food to be submitted to cooking and/or heating into said outer vessel.

## Claims

1. An apparatus for cooking and/or heating low-temperature food, in particular rice, comprising:
- an outer pot body (2) having an upper rest rim (2a), and
- an inner pot body (3) having at least one support expansion (3a) and defining, in an operating position, defining a cooking chamber (4) and, in cooperation with said outer pot body (2), a hollow space (5) included between respective bottoms (3b, 2b) and side surfaces (3c, 2c),
said inner pot body (3) having at least one through opening (3d) on its side surface (3c), below said support expansion (3a), so that in said hollow space (5) a lower region (5a), adapted to hold water to be brought to a boil, and an upper region (5b), adapted to contain steam and put into communication with said cooking chamber (4), are defined, **characterized in that** said inner pot body (3) is insertable in said outer pot body (2) and said support expansion (3a) is adapted to be disposed upon said upper rest rim (2a) in said operating position.

2. An apparatus as claimed in claim 1, **characterized in that** said support expansion (3a) of the inner pot body (3) is disposed spaced apart from the perimetric rim (3e) of the inner pot body (3) itself.

3. An apparatus as claimed in claim 1, **characterized in that** sets of through openings (3d) are provided, which are placed side by side so that they do not interfere with the food when it is served from the pot.

4. A process for cooking and/or heating, low-temperature food, in particular rice, using an apparatus according to any of claims from 1 to 3, **characterized in that** it comprises the following steps:
- prearranging an inner pot body (3) adapted to house food to be cooked and/or heated,
- adding a given amount of water,
- interposing a hollow space (5) between the outer surface of said inner pot body (3) and a high-temperature heat source, which hollow space (5) is defined by an outer pot body (2) disposed externally of the inner pot body (3) and is adapted to hold water to be brought to a boil so that it transfers heat to the inner pot body (3), and
- conveying steam directly to the food housed in said inner pot body (3).

5. A process as claimed in claim 4, **characterized in that** said steam conveyed to the food is obtained from the same boiling water present in said hollow space (5).

## Patentansprüche

1. Apparat zum Kochen und/oder Erhitzen von Tieftemperaturlebensmitteln, insbesondere Reis, umfassend:
- einen Außentopfkörper (3) mit einem oberen Stützrand (2a),
und
- einen Innentopfkörper mit mindestens einer Tragexpansion (3), der in einer Arbeitsposition eine Kochkammer (4) und in Zusammenarbeit mit dem Außentopfkörper einen Zwischenraum (5) definiert, der zwischen entsprechenden Böden (3b, 3b) und Seitenflächen (3c, 2c) positioniert ist,
wobei der Innentopfkörper (3) mindestens eine Durchöffnung (3d) an seiner Seitenfläche (3c) unter der Tragexpansion (3a) aufweist, so daß im Zwischenraum (5) ein zu kochendes Wasser enthaltender Untenbereich (5a) und ein Dampf enthaltender und mit der Kochkammer (4) verbundener Obenbereich (5b) definiert sind, **dadurch gekennzeichnet, daß** der Innentopfkörper (3) in den Außentopfkörper (2) einsetzbar ist, und daß die Tragexpansion (3a) auf den oberen Stützrand (2a) in der Arbeitsposition anzuordnen ist.

2. Apparat nach Anspruch 1, **dadurch gekennzeichnet, daß** die Tragexpansion (3a) des Innentopfkörpers (3) in einem gewissen Abstand von dem Umfangrand (3a) des Innentopfkörpers (3) angeordnet ist.

3. Apparat nach Anspruch 1, **dadurch gekennzeichnet, daß** Reihen von Durchöffnungen (3d) vorgesehen sind, die nebeneinander positioniert sind, so daß sie mit den vom Topf eingegossenen Lebensmitteln nicht einmischen.

4. Verfahren zum Kochen und/oder Erhitzen von Tieftemperaturlebensmitteln, insbesondere Reis, indem man ein Apparat nach einem der Ansprüche 1 bis 3 benutzt, **dadurch gekennzeichnet, daß** es die folgenden Schritte umfasst
- Bereitstellen von einem Innentopfkörper (3), der zum Lagern von zu kochenden und/oder erhitzenden Lebensmitteln geeignet ist,
- Zusatz von einer gegebenen Wassermenge,
- Einsetzen von einem Zwischenraum (5) zwischen der Außenfläche des Innentopfkörpers (3) und einer Hochtemperatur-Wärmequelle, wobei dieser Zwischenraum (5) von einem Außentopfkörper (2) definiert ist, der außen vom Innentopfkörper (3) angeordnet ist und zum Lagern von zu kochendem Wasser geeignet ist, so daß er Wärme zum Innentopfkörper (3) abgibt, und
- unmittelbares Leiten von Dampf zu den im Innentopfkörper (3) gelagerten Lebensmitteln.

5. Verfahren nach Anspruch 4, **dadurch gekennzeichnet, daß** der zu den Lebensmitteln geleitete Dampf von demselben kochenden Wasser, das im Zwischenraum enthalten ist, erhalten wird.

## Revendications

1. Appareil pour cuire et/ou réchauffer des aliments, en particulier du riz, à basse température, comprenant:
- un corps de marmite extérieur (2) ayant un bord supérieur d'appui (2a),
et
- un corps de marmite intérieur (3) ayant au moins une expansion de support (3a) et définissant, dans une position de travail, une chambre de cuisson (4), et en coopération avec ledit corps de marmite extérieur (2) un interstice (5) compris entre des fonds correspondants (3b, 2b) et des surfaces latérales (3c, 2c),
ledit corps de marmite intérieur (3) ayant au moins une ouverture de passage (3d) sur sa surface latérale (3c), au dessous de ladite expansion de support (3a), de façon à définir dans ledit interstice (5) une région inférieure (5a) apte à contenir de l'eau qu'il faut porter au point d'ébullition, et une région supérieure (5b) apte à contenir de la vapeur et en communication avec ladite chambre de cuisson (4), **caractérisé en ce que** ledit corps de marmite intérieur (3) peut être inséré dans ledit corps de marmite extérieur (2) et que ladite expansion de support (3a) est apte à être placée sur ledit bord d'appui supérieur (2a) dans ladite position de travail.

2. Appareil selon la revendication 1, **caractérisé en ce que** ladite expansion de support (3a) du corps de marmite intérieur (3) est placée à une certaine distance du bord périmétral (3e) dudit corps de marmite intérieur (3).

3. Appareil selon la revendication 1, **caractérisé en ce que** on a prévu des groupes d'ouvertures passantes (3d) placées l'une à côté de l'autre de façon à ce qu'elles n'interfèrent pas avec les aliments versés de la marmite.

4. Méthode pour cuire et/ou réchauffer des aliments, en particulier du riz, à basse température utilisant un appareil selon n'importe quelle des revendications 1 à 3, **caractérisée en ce que** elle comprend les phases suivantes:
- préparer un corps de marmite intérieur (3) apte à loger des aliments à cuire et/ou réchauffer,
- ajouter une quantité préétablie d'eau,
- interposer un interstice (5) entre la surface extérieure dudit corps de marmite intérieure (3) et une source de chaleur à haute température, ledit interstice (5) étant défini par un corps de marmite extérieure (2) placé à l'extérieur du corps de marmite intérieur (3) et étant apte à contenir de l'eau qu'il faut porter au point d'ébullition de façon à ce qu'elle passe la chaleur au corps de marmite intérieur (3), et
- envoyer de la vapeur directement sur les aliments logés dans ledit corps de marmite intérieur (3).

5. Méthode selon la revendication 4, **caractérisée en ce que** ladite vapeur envoyée sur les aliments est obtenue à partir de la même eau en ébullition présente dans ledit interstice (5).
